# EUROPEAN PATENT SPECIFICATION

(11) **EP 1 431 316 B1**
(45) Date of publication and mention of the grant of the patent: **22.03.2006**
(21) Application number: 03027549.9
(22) Date of filing: 01.12.2003
(51) Int. Cl.: C08F 4/00

(54) **The in situ polymerization of monoethylenically unsaturated monomers with oligomeric or polymeric secondary amines**
Die in-situ-Polymerisation von monoethylenisch ungesättigten Monomeren mit oligomeren oder polymeren sekundären Aminen
La polymérisation in situ de monomères insaturés monoéthyléniquement avec des amines secondaires oligomères ou polymères

(30) Priority: 13.12.2002 EP 02027693
(43) Date of publication of application: 23.06.2004
(73) Proprietor: Bayer MaterialScience AG, 51368 Leverkusen (DE)
(72) Inventor: Detrembleur, Christophe, Dr., 4000 Liege (BE); Rüdiger, Claus, Dr., 47798 Krefeld (DE); Meyer, Rolf-Volker, Dr., 53804 Much (DE)

(56) References cited:
- EP-A- 0 135 280

## Description

### FIELD OF THE INVENTION

The invention relates to polymerization and more particularly to the preparation of (co)polymers.

### SUMMARY OF THE INVENTION

A process for the preparation of (co)oligomers or (co)polymers is disclosed. The process entails first the preparation of a mixture that contains a monoethylenically unsaturated monomer conforming to

HR¹C = CR²R³ (M)

an oxidizing agent and at least one polymer or oligomer conforming to formula (I), 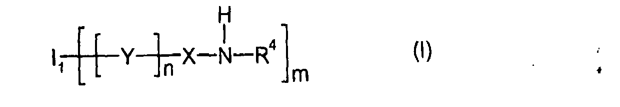 and an optional free radical initiator and then heating the mixture at a temperature in the range of 0°C to 220°C.

### BACKGROUND OF THE INVENTION

Today, the demand for homopolymers, random copolymers and block copolymers of a specific molecular weight, narrow molecular weight distribution and/or well-defined end groups has continuously increased in a number of industries. The controlled structure of these macromolecules provides them with novel properties and allows a tailor-made property profile to be obtained. Many new technologies require controlled polymer structures such as for instance in the fields of electronics, computer science, communications, genetic engineering, biotechnology and materials science.

Many polymers are commercially produced by free radical polymerization due to the far less demanding conditions, i.e. the possible use of water as solvent, the far broader temperature range which can be employed as well as the broader range of monomers which can be polymerized. Moreover, radical copolymerization offers many opportunities for modifying the polymer properties. The neutrality of the radical species is however responsible for irreversible transfer and termination reactions, which are responsible for the poor control of the macromolecular structures including degree of polymerization, polymolecularity, end functionality and chain architecture.

On the other hand, controlled radical polymerization (CRP) is a powerful tool for finely controlling the molecular characteristics of the chains (Mₙ, M_{w}/Mₙ) and their macromolecular architecture. For example, well-defined block copolymers can be synthesized by the sequential addition of comonomers and polymers with terminal functional groups can be made available by the judicious choice of either the initiator (α-chain-end) or the deactivating agent (ω-chain-end).

Of all the CRP systems presently under investigation, nitroxyl-mediated polymerization (NMP) is one of the most efficient. This process is based on the reversible capture of the propagating radicals by nitroxyl radicals to form dormant chains. This approach is for example disclosed in US-A 4,581,429. Nevertheless, this NMP process is handicapped by slow polymerization kinetics, a limited range of suitable monomers and the high cost of the required nitroxyl radicals.

Quite recently, some of these NMP problems have been solved. Both the acceleration of the rate of polymerization and the broadening of the range of monomers to be polymerized have been reported by Hawker et al. (*J*. *Am. Chem. Soc.* 1999, 121, 3904) and for example in WO-A 96/24620. Reduced polymerization temperatures have been reported by Miura et al. (*Macromolecules* 2001, 34, 447) by using nitroxyl radicals with spiro structures.

Although these improved NMP processes represent attractive methods for obtaining new polymer structures, they still require the use of not readily available and complicated nitroxyl radicals and/or alkoxyamines, which considerably increase the total cost of a technical process. Consequently, there is still a need for more simple NMP processes for polymerizing a broad range of monomers.

WO-A 99/03894 and US-A 6,262,206 disclose the use of nitrones and nitroso compounds to control the radical polymerization of vinyl monomers. When these compounds were added to the radical polymerization of vinyl monomers, nitroxyl radicals were formed in-situ by reaction of the initiating radicals or propagating chains with the nitrones or nitroso compounds. The polymerization was thus controlled by an NMP mechanism.

The use of nitrones and nitroso compounds for promoting the free-radical polymerization of vinyl monomers controlled by in-situ NMP process has also been reported for example by D. F. Grishin et al., *Polymer Science, Ser. A,* 1999, 41(4), 401; D. F. Grishin et al, *Polymer Science, Ser. B.* 2000 42(7-8), 189; D. F. Grishin et al., *Russian Journal of Applied Chemistry* 2001, 74(3), 494; D.F. Grishin et al. *Mendeleev Commun.* 1999, 250; D. F. Grishin et al., *Russian Journal of Applied Chemistry* 2001, 74(9), 1594.

More recently, the controlled radical polymerization of styrene mediated by nitroso-tert-octane was reported by J.M. Catala et al., *Macromolecules* 2001, 34, 8654.

These in situ processes using nitroso compounds or nitrones allowed the avoidance of the tedious synthesis of the nitroxyl radicals. Nevertheless, these methods require the use of preformed reagents which may be toxic (especially in case of nitroso compounds), and most of them are still not readily available and have to be synthesized by special method.

US-A 6,320,007 and JP-A 08208714 describe the manufacture of thermoplastic polymers having narrow molecular weight distribution using an in situ NMP process, in which the stable nitroxyl radical is formed from a precursor substance in a reactor. The polymerization process occurs in two steps: firstly the nitroxyl radicals are formed from the precursor (secondary amine) and secondly, the nitroxyl radical is added to the polymerization of the vinyl monomer in order to form a thermoplastic polymer characterized by a narrow molecular weight distribution. In the two examples, 2,2,6,6-tetramethylpiperidine (TMP) is used as precursor for the nitroxyl radical, when combined with m-chloroperbenzoic acid or a mixture of hydrogen peroxide and sodium tungstate as the oxidizing agent. Drawbacks of these processes are the long reaction times to form the nitroxyl radical prior to polymerization and the use of free-radical initiators (such as benzoyl peroxide for instance) to initiate the polymerization, which makes a preliminary reaction between the monomer, the initiator and the nitroxyl radical necessary before polymerization. This is associated with an increase in the cost of the process. Moreover, the polymerizations are very slow and require several days to be completed.

The object of the present invention was to provide a new synthetic pathway for the synthesis of homo- and copolymers of controlled molecular weight and controlled molecular structure. Such a process should be a simple and inexpensive method of controlling the free-radical polymerization of vinyl monomers that overcomes the drawbacks encountered in the prior art.

### DETAILED DESCRIPTION OF THE INVENTION

Surprisingly, it has now been found that it is possible to provide a process for the preparation of (co)polymers of controlled molecular weight, narrow polydispersity, high monomer conversion and controlled architecture, at relatively low temperatures and with short reaction times, if the polymerization of vinyl monomers is carried out in the presence of at least one hindered secondary amine chemically bound to a polymer or oligomer and an oxidizing agent. The addition of a free-radical initiator before polymerization is only optional. Moreover, no preliminary reaction between the secondary amine and the oxidizing agent is required prior to the addition of the monomer(s), and the polymerization medium can be quite rapidly heated at the polymerization temperature without any preliminary reaction of the products.

The object of the present invention is a process for producing oligomers, co-oligomers, polymers or block or random copolymers comprising
(I) preparing a mixture that includes
   at least one monoethylenically unsaturated monomer of the general formula (M),

   HR¹C = CR²R³ (M),

   wherein
   R¹, R², R³ are independently selected from the group consisting of hydrogen, C₁-C₂₀-alkyl, C₁-C₂₀-cycloalkyl, C₆-C₂₄-aryl, halogen, cyano, C₁-C₂₀-alkyl ester, C₁-C₂₀-cycloalkyl ester, C₁-C₂₀-alkylamide, C₁-C₂₀-cycloalkylamide, C₆-C₂₄-aryl ester and C₆-C₂₄-arylamide,
   at least one oxidizing agent (A) and
   at least one polymer or oligomer containing at least one hindered secondary amine of the general formula (I), 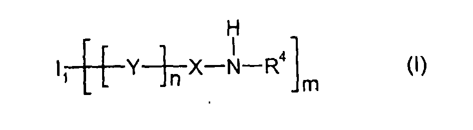 wherein
   - Y: is an organic residue based on ethylenically unsaturated monomers (M) corresponding to the general formula HR¹C=CR²R³,
   - R¹, R², R³: have the aforesaid meaning,
   - m: is an integer of 1 to 50, preferably 1 to 20, and more preferably 1 to 10,
   - n: is an integer of 1 to 300, preferably 1 to 50, and more preferably 1 to 20,
   - I₁: represents an initiator,
   - R⁴: represents a secondary or tertiary carbon atom and is independently selected from the group consisting of C₁-C₁₈-alkyl, C₂-C₁₈-alkenyl, C₂-C₁₈₋alkynyl, C₃-C₁₂-cycloalkyl or C₃-C₁₂-heterocycloalkyl, C₆-C₂₄-aryl, which may be unsubstituted or substituted by NO₂, halogen, amino, hydroxy, cyano, carboxy, ketone, C₁-C₄-alkoxy, C₁-C₄-alkylthio or C₁-C₄₋alkylamino, and
   - X: represents a secondary or tertiary carbon atom and is independently selected from the group consisting of C₁-C₁₈-alkyl, C₂-C₁₈-alkenyl, C₂-C₁₈₋alkynyl, C₃-C₁₂-cycloalkyl or C₃-C₁₂-heterocycloalkyl, C₆-C₂₄-aryl, which may be unsubstituted or substituted by NO₂, halogen, amino, hydroxy, cyano, carboxy, ketone, C₁-C₄-alkoxy, C₁-C₄-alkylthio or C₁-C₄₋alkylamino,
   and an optional free radical initiator (B) and
(II) heating the mixture at a temperature in the range from about 0°C to 220°C.

The polymers or oligomers of the general formula (I) may be synthesized by any of the methods known in the prior art for synthesizing such functional polymers or oligomers.

Preferably, the synthesis of (I) is carried out by living anionic polymerization of one or several vinyl monomers followed by a capping reaction of the reactive anionic chains with imines of the general structure (II), as described, for example, in US-A 3,178,398 (column 5, lines 27-51) and US-A 4,816,520 (column 2, line 65 to column 3, line 7).

Suitable nitrogen compounds for the preparation of the polymers or oligomers of the general formula (I) are compounds of the general formula (II), 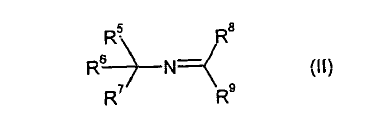 wherein
each of R⁵, R⁶ and R⁷ is independently selected from the group consisting of hydrogen, C₁-C₁₈-alkyl, C₃-C₁₂-cycloalkyl or C₃-C₁₂-heterocycloalkyl and C₆-C₂₄₋aryl which is unsubstituted or substituted by C₁-C₁₈-alkyl, C₃-C₁₂-cycloalkyl or C₃-C₁₂-heterocycloalkyl;
or wherein R⁵, R⁶ and R⁷ are bound to a secondary or tertiary carbon atom and may be identical or different;
or R⁵, R⁶ and R⁷ optionally form, together with the carbon atom linking them, a C₃-C₁₂-Cycloalkyl group or a C₂-C₁₃-heterocycloalkyl group containing oxygen, sulfur or nitrogen atoms;
or
R⁵, R⁶ and R⁷ optionally form, together with the carbon atom linking them, a C₆-C₂₄-aryl or C₆-C₂₄-heteroaryl residue containing oxygen, sulfur or nitrogen atoms;
or
R⁵, R⁶ and R⁷ optionally form, together with the carbon atom linking them, a polycyclic ring system or a polycyclic heterocycloaliphatic ring system containing oxygen, sulfur or nitrogen atoms;
and each of
R⁸ and R⁹ is independently selected from the group consisting of hydrogen, C₁-C₁₈-alkyl, C₃-C₁₂-cycloalkyl or C₃-C₁₂-heterocycloalkyl and C₆-C₂₄-aryl, which is unsubstituted or substituted by C₁-C₁₈-alkyl, C₃-C₁₂-cycloalkyl or C₃-C₁₂₋heterocycloalkyl.
Preferred nitrogen compounds are N-benzylidene-N-(tert-butyl)amine, N-(tert-butyl)-N-(2,2-dimethylpropylidene)amine, N-(tert-butyl)-N-(2-methylpropylidene)amine, N-(tert-butyl)-N-ethylideneamine, N-(tert-butyl) N-(1-methylethylidene)amine, N-(2,2-dimethylpropylidene)-N-isopropylamine, N-isopropyl-N-(2-methylpropylidene)amine, N-benzylidene-N-isopropylamine, N-isopropyl-N-(1-phenylethylidene)amine, N-(tert-butyl)-N-(1-phenylethylidene)amine and N-benzylidene-N-(phenyl)amine.

Particulary preferred are N-benzylidene-N-(tert-butyl)amine, N-benzylidene-N-(phenyl)amine, N-benzylidene-N-isopropylamine and N-(tert-butyl)-N-(1-methyl-ethylidene)amine.

The monomers which may be used for the preparation of the residue Y of polymers or oligomers of the general structure (I) using living anionic polymerization include conjugated dienes and vinyl-substituted aromatic compounds as reported in US-A 3,178,398 (column 2, line 30 to column 3, line 54) and US-A 4,816,520 (column 1, line 56 to column 2, line 2) both incorporated herein by reference. Conjugated dienes may be polymerized alone or in admixture with each other to form copolymers or block copolymers. Vinyl-substituted compounds may be polymerized alone or in admixture with each other to form copolymers or block copolymers. Vinyl-substituted compounds and conjugated dienes may be polymerized alone or in admixture with each other to form copolymers or block copolymers.

Styrene and styrene derivatives such as α-methylstyrene are the preferred monomers for the synthesis of the residue Y of polymers or oligomers of the general formula (I).

Suitable initiators (I₁) may be any of the anionic initiators reported in US-A 3,178,398 (column 4, line 29 to column 5, line 26) and any of the initiators known in the prior art for the anionic polymerization of vinyl monomers and dienes.

Multifunctional initiators well-known in the prior art may also be used. Examples of difunctional initiators include the naphthalene radical anion as reported by Szwarc et al. in *J*. *Am*. *Chem. Soc.* (**1956**, 78, 2656) and a combination of n-butyllithium (BuLi) and divinylbenzene (DVB) (Beinert et al., *Makromol. Chem*. **1978**, *179*, 551; Lutz et al., *Polymer* **1982**, 23, 1953). By varying the ratio BuLi/DVB, it is also possible to form multifunctional initiators.

Typical monoethylenically unsaturated monomers (M) which are suitable for the process according to the present invention are the alkyl esters of acrylic or methacrylic acids, such as methyl acrylate, ethyl acrylate, butyl acrylate, methyl methacrylate, ethyl methacrylate, butyl methacrylate and isobutyl methacrylate; the hydroxyalkyl esters of acrylic or methacrylic acids, such as hydroxyethyl acrylate, hydroxypropyl acrylate, hydroxyethyl methacrylate and hydroxypropyl methacrylate; acrylamide, methacrylamide, N-tertiary butylacrylamide, N-methylacrylamide, N,N-dimethylacrylamide; acrylonitrile, methacrylonitrile, allyl alcohol, dimethylaminoethyl acrylate, dimethylaminoethyl methacrylate, phosphoethyl methacrylate, N-vinylpyrrolidone, N-vinylformamide, N-vinylimidazole, vinyl acetate, conjugated dienes such as butadiene or isoprene, styrene, styrenesulfonic acid salts, vinylsulfonic acid salts and 2-acrylamido-2-methylpropane-sulfonic acid salts and acryloyl. Suitable monomers (M) may be water-soluble or water-insoluble.

Beside the above listed monoethylenically unsaturated monomers other ethylenically unsaturated monomers can be utilized additionally.

Examples of such additionally utilized (co)comonomers are C₃-C₆-ethylenically unsaturated monocarboxylic acids as well as the alkali metal salts and ammonium salts thereof. The C₃-C₆-ethylenically unsaturated monocarboxylic acids include acrylic acid, methacrylic acid, crotonic acid, vinylacetic acid and acryloxypropionic acid. Acrylic acid and methacrylic acid are the preferred mono-ethylenically unsaturated monocarboxylic acid monomers.

Examples of C₈-C₁₆-ethylenically unsaturated phenolic compounds which may also be used as well as such (co)monomers are 4-hydroxystyrene, 4-hydroxy, α-methyl styrene, 2,6-ditert-butyl and 4-vinyl phenol.

Another class of carboxylic acid monomers suitable for use as (co)monomers in this invention are C₄-C₆-ethylenically unsaturated dicarboxylic acids and the alkali metal and ammonium salts thereof as well as the anhydrides of cisdicarboxylic acids. Suitable examples include maleic acid, maleic anhydride, itaconic acid, mesaconic acid, fumaric acid and citraconic acid. Maleic anhydride (and itaconic acid) is/are the preferred monoethylenically unsaturated dicarboxylic acid monomer(s).

The acid monomers suitable for use in the present invention may be in the form of their acids or in the form of the alkali metal salts or ammonium salts of the acid.

Preferred monomers (M) are selected from the group consisting of (meth)acrylic acid esters of C₁-C₂₀-alcohols, acrylonitrile, cyanoacrylic acid esters of C₁-C₂₀₋alcohols, maleic acid diesters of C₁-C₆-alcohols, maleic anhydride, vinylpyridines, vinyl(alkylpyrroles), vinyloxazoles, vinyloxazolines, vinylthiazoles, vinylimidazoles, vinylpyrimidines, vinyl ketones, styrene or styrene derivatives which contain a C₁-C₆-alkyl radical or halogen in the α-position and contain up to 3 additional substituents on the aromatic ring.

Particularly preferred monomers (M) are styrene, substituted styrene, conjugated dienes, acrolein, vinyl acetate, acrylonitrile, methyl acrylate, methyl methacrylate, butyl acrylate, butyl methacrylate, 2-ethylhexyl acrylate, cyclohexyl methacrylate, isobornyl methacrylate and maleic anhydride.

Suitable oxidizing agents (A) for the process according to the present invention include all oxidizing agents known from the prior art for the oxidation of secondary amines into nitroxyl radicals. Preferred oxidizing agents are peracids such as peracetic acid, perpropionic acid, m-chloroperbenzoic acid, dimethyldioxirane, perbenzoic acid or peroxides such as dibenzoyl peroxide, potassium peroxymonosulfate (2 KHSO₅KHSO₄K₂SO₄, Oxone®, DuPont Specialty Chemistry, USA), hydrogen peroxide, hydrogen peroxide/sodium tungstate, hydrogen peroxides/titanium containing catalysts, such as for example titanium dioxide and titanium silicalites (EP-A 0 488 403, page 5), phosphotungstic acid and oxidizing gases such as molecular oxygen or ozone.

Metal oxides such as silver oxide, lead (IV) oxide and sodium tungstate may also be used, optionally in combination with another oxidizing agent. A mixture of various oxidizing agents may also be used.

Particularly preferred are peracetic acid, perpropionic acid, hydrogen peroxide, hydrogen peroxide/titanium containing catalysts, potassium peroxymonosulfate (2 KHSO₅KHSO₄ K₂SO₄), silver oxide and lead (IV) oxide.

Suitable free radical initiators (B) of the present invention are any suitable agents producing free radicals, for example precursors such as azo compounds, peroxides or peroxy esters, which generate radicals by thermolysis or precursors such as styrene, which generate radicals by autopolymerization. It is also possible to generate radicals by redox systems, photochemical systems or by high energy radiation such as beam or X- or γ- radiation.

Other useful systems for generating radicals are organometallic compounds such as Grignard reagents (e.g. Hawker et al., Macromolecules 1996, 29, 5245) or halogenated compounds which produce radicals in the presence of a metal complex according to the Atom Transfer Radical Addition Process (ATRA) (e.g. WO-A 00/61544).

Examples of free radical initiators (B) generating free radicals by thermolysis are 2,2'-azobis(isobutyronitrile) (AIBN), 2,2'-azobis(isovaleronitrile), 2,2'-azobis-(methylisobutyrate), 4,4'-azobis(4-cyanopentanoic acid), 1,1'-azobis(1-cyclohexanecarbonitrile), 2-tert-butylazo-2-cyanopropane, 2,2'-azobis[2-methyl-N-(1,1-bis(hydroxymethyl)-2-hydroxyethylpropionamide], 2,2'-azobis[2-methyl-N-'(2-hydroxyethyl) propionamide], 2,2'-azobis(isobutyramidine hydrochloride), 2,2'-azobis(N,N'-dimethyleneisobutyramine), 2,2'-azobis[2-methyl-N-(1,1-bis(hydroxymethyl)-2-ethyl)-propionamide], 2,2'-azobis[2-methyl-N-(2-hydroxyethylpropionamide], 2,2'-azobis(isobutylamide) dihydrate, 2,2'-azobis(2,2,4-trimethylpentane), 2,2'-azobis(2-methylpropane), tert-butylperoxyacetate, tertbutylperoxybenzoate, tert-butylperoxyoctoate, tert-butylperoxyneodecanoate, tertbutylperoxyisobutyrate, tert-amylperoxypivalate, tert-butylperoxypivalate, diisopropylperoxydicarbonate, dicyclohexylperoxydicarbonate, dicumyl peroxide, dibenzoyl peroxide, di-tert-butylperoxide, dilauroylperoxide, potassium peroxy disulfate, ammonium peroxy disulfate, di-tert-butyl hyponitrite and dicumyl hyponitrite.

Initiators generating radicals by photolysis are for example benzoin derivatives, benzophenone, acyl phosphine oxides and photoredox systems.

Initiators generating radicals as a result of a redox reaction are in general a combination of an oxidant and a reducing agent. Suitable oxidants are, for example, tert-butyl hydroperoxide, cumyl hydroperoxide, benzoyl peroxide and p-methanehydroperoxide. Suitable reducing agents are for example Fe(II) salts, Ti(III) salts, potassium thiosulfate, potassium bisulfite, ascorbic acid and salts thereof, oxalic acid and salts thereof, dextrose and Rongalite® (sodium formaldehyde sulfoxylate, BASF AG, Ludwigshafen, Germany).

Preferred radical initiators (B) are compounds which generate free radicals by thermolysis. AIBN and benzoyl peroxide are particularly preferred.

One method of carrying out the process of the invention is that in the first step at least one polymer or oligomer of the general formula (I), at least one oxidizing agent (A) and at least one vinyl monomer (M) are mixed together. The temperature of the reaction may range from about -20°C to about 150°C, preferably from 0° to 100 °C, preferably from about 0°C to about 80°C, and more preferably from about 0°C to about 50°C. The reaction time may range from about 1 minute to about 72 h, preferably from about 5 minutes to about 24 h and more preferably from about 15 minutes to about 12 h. The first step of the process of the present invention may be carried out in air or in an inert gas atmosphere such as nitrogen or argon.

The polymer or oligomer of the general formula (I) and the oxidizing agent (A) are introduced in a quantity ranging from about 40 wt.% to about 0.01 wt.%, preferably from about 20 wt.% to about 0.05 wt.% and more preferably from about 10 wt.% to about 0.1 wt.%, based on the weight of the monomer(s). The oxidizing agent (A) is introduced in a quantity ranging from about 0.01 to about 10 equivalents relative to the secondary amines groups contained by (I), preferably in a quantity from about 0.1 to about 2.5 equivalents, and more preferably in a quantity from about 0.2 to about 1.5 equivalents.

In the second step of the process according to the invention, polymerization occurs by heating the mixture of the first step at a temperature ranging from about 0°C to about 220°C, preferably from about 50°C to about 180°C, and most preferably from about 70°C to about 150°C. The second step of the process of the present invention is generally carried out in an inert gas atmosphere such as nitrogen or argon. The reaction time may range from about 10 minutes to about 72 h, preferably from about 30 minutes to about 32 h and more preferably from about 1 h to about 24 h.

Optionally, a quantity of free radical initiator (B) may be added to the polymerization medium during the first step of the process and/or the second step of the process. The free radical initiator is introduced in a quantity ranging from about 0.01 to about 10 equivalents in relation to the polymer or oligomer of the general formula (I), preferably from about 0.1 to about 5 equivalents, and more preferably in a quantity from about 0.2 to about 2 equivalents.

Another method of carrying out the process according to the invention is to heat a mixture of at least one polymer or oligomer of the general formula (I), at least one oxidizing agent (A) and at least one vinyl monomer (M). The temperature ranges from about 0°C to about 220°C, preferably from about 50°C to about 180°C, and most preferably from about 70°C to about 150°C. Polymerization is generally carried out in an inert gas atmosphere such as nitrogen or argon. The reaction time ranges from about 10 minutes to about 72 h, preferably from about 30 minutes to about 32 h, and more preferably from about 1h to about 24 h.

Another method of carrying out the process of the invention is to produce nitroxyl radicals of the general formula (III), 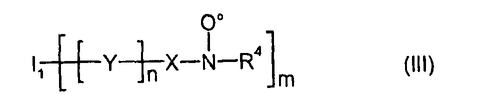 wherein
- Y: organic residue based on ethylenically unsaturated monomers (M) corresponding to the general formula HR¹C=CR²R³ and
- R¹, R², R³: are independently selected from the group consisting of hydrogen, C₁-C₂₀-alkyl, C₁-C₂₀-cycloalkyl C₆-C₂₄-aryl, halogen, cyano, C₁-C₂₀-alkyl ester C₁-C₂₀-cycloalkyl ester, C₁-C₂₀-alkylamide, C₁-C₂₀-cycloalkylamide C₆-C₂₄-aryl ester or C₆-C₂₄-arylamide,
- m: is an integer of 1 to 50, preferably 1 to 20, and more preferably 1 to 10,
- n: is an integer 1 to 300, preferably 1 to 50, and more preferably 1 to 20 and
- I₁: represents an initiator and
- R⁴: represents a secondary or tertiary carbon atom and is independently selected from the group consisting of C₁-C₁₈-alkyl, C₂-C₁₈-alkenyl, C₂-C₁₈₋alkynyl, C₃-C₁₂-cycloalkyl or C₃-C₁₂-heterocycloalkyl, C₆-C₂₄-aryl, which may be unsubstituted or substituted by NO₂, halogen, amino, hydroxy, cyano, carboxy, ketone, C₁-C₄-alkoxy, C₁-C₄-alkylthio or C₁-C₄₋alkylamino,
- X: represents a secondary or tertiary carbon atom and is independently selected from the group consisting of C₁-C₁₈-alkyl, C₂-C₁₈-alkenyl, C₂-C₁₈₋alkynyl, C₃-C₁₂-cycloalkyl or C₃-C₁₂-heterocycloalkyl, C₆-C₂₄-aryl, which may be unsubstituted or substituted by NO₂, halogen, amino, hydroxy, cyano, carboxy, ketone, C₁-C₄-alkoxy, C₁-C₄-alkylthio or C₁-C₄₋alkylamino,
by mixing the polymer or oligomer of the general structure (I) with the oxidizing agent (A), followed by isolation of the compound of the general formula (III).

The temperature of the first reaction step may range from about -20°C to about 150°C, preferably from about 0°C to about 80°C, and more preferably from about 0°C to about 50°C. The reaction time may range from about 1 minute to about 72 h, preferably from about 5 minutes to about 24 h and more preferably from about 15 minutes to about 12 h. The first step of this process may be carried out in air or in an inert gas atmosphere such as nitrogen or argon. Preferably, this reaction is carried out in the presence of solvents such as dichloromethane, toluene or xylene. Water may also be used as a cosolvent. When water is used as a cosolvent, a basic organic or inorganic buffer or organic or inorganic bases, such as Na₂CO₃, NaHCO₃, K₂CO₃, KHCO₃, Na₃PO₄, Na₂HPO₄, NaH₂PO₄, K₃PO₄, K₂HPO₄ or KH₂PO₄, sodium or potassium hydrogen phthalate, metals salts of carboxylic acids such as acetic acid, propionic acid, oxalic acid, phthalic acid or mixtures thereof, may be added. Preferred bases are Na₂CO₃, NaHCO₃, K₂CO₃, KHCO₃ or the sodium, calcium or potassium salt of acetic acid.

The molar ratio of oxidizing agent (A) to compounds of the general formula (I) is 0.01 to 50, preferably 0.1 to 20 and more preferably 0.25 to 10. The polymer or oligomer of the general structure (I) and oxidizing agent (A) are introduced in a quantity ranging from about 80 wt.% to about 0.01 wt.%, preferably from about 20 wt.% to about 0.1 wt.% and more preferably from about 10 wt.% to about 0.5 wt.%, based on the weight of the solvent. The polymer or oligomer of the general formula (III) is finally recovered after synthesis and optionally purified.

In the second step of this process, the polymer or oligomer of the general formula (III) as prepared in step one, is dissolved in the vinyl monomer(s) (M) and the polymerization occurs by reacting this mixture at a temperature ranging from about 0°C to about 220°C, preferably from about 50°C to about 180°C, and most preferably from about 70°C to about 150°C. The second step of this process is generally carried out in an inert gas atmosphere such as nitrogen or argon. The reaction time may range from about 10 minutes to about 72 h, preferably from about 30 minutes to about 32 h and more preferably from about 1h to about 24 h.

Optionally, a quantity of free radical initiator (B) may be added to the polymerization medium during the second step of the process. The free radical initiator is introduced in a quantity ranging from about 0,01 to about 10 equivalents in relation to (I), preferably from about 0.1 to about 5 equivalents, and more preferably from about 0.2 to about 2 equivalents.

The present invention also relates to a polymerizable mixture containing
a) at least one vinyl monomer or ethylenically unsaturated oligomer,
b) at least one polymer or oligomer of the general formula (III), and
c) optionally a free radical initiator (B).

In the process according to the invention it is preferred to use as few solvents as possible. If organic solvents are required, suitable solvents or mixtures of solvents are typically pure alkanes, such as hexane, heptane or cycloalkane, hydrocarbons, such as toluene, ethylbenzene or xylene, halogenated hydrocarbons, such as chlorobenzene, esters, such as ethyl acetate, propyl, butyl or hexyl acetate, ethers, such as diethyl ether, dibutyl ether or ethylene glycol dimethyl ether, alcohols, such as methanol, ethanol, ethylene glycol, monomethyl ether, ketones, amides, sulfoxides or mixtures thereof. Water may also be used in the process according to the present invention.

Water may be used in the process of the present invention when water-soluble monomers are used. Water may also be used for the polymerization of water-insoluble monomers in order to provide emulsion, miniemulsion, suspension or dispersion polymerization.

The type of polymerization used may be bulk, solution, miniemulsion, emulsion, dispersion or suspension polymerization and it may be carried out either batchwise, semi-batchwise or continuously.

Optionally, some additives may be added to the polymerization medium before the polymerization or during the polymerization process in order to accelerate the polymerization. Such additives are well-known in the art and are for example camphorsulfonic acid, 2-fluoro-1-methylpyridinium p-toluenesulfonate, acylating compounds such as acetic anhydride (Tetrahedron 1997, 53(45), 15225), glucose, dextrose (Macromolecules 1998, 31, 7559), ascorbic acid (Macromolecules 2001, 34, 6531) or long-life radical initiators as reported in US-A 6,288,186 (column 4, lines 8-24).

The polymers prepared according to the present invention display low polydispersity (M_{w}/Mₙ) which is usually lower than 2 and preferably lower than 1,5.

The number average molecular weight of the polymer chains increases linearly with the monomer conversion, which allows a tailor-made polymer molecular weight to be obtained. Furthermore, the molecular weight of the polymers may be controlled by varying the amount of secondary amine(s) (compound (I)) and/or oxidizing agent(s) in relation to the amount of monomers. High molecular weight polymers may be formed.

A further advantage of the present invention is that, after the removal of the non-polymerized monomers from the (co)polymers or after reaching a conversion rate of 100%, a second polymerization step may be initiated simply by adding to the polymer synthesized in the first step more of fresh vinyl monomer or monomer mixture that may be different from the vinyl monomer or monomer mixture used in the first polymerization step. The polymerization of the vinyl monomer or monomer mixture added in the second step is then initiated by the polymer chains synthesized in the first polymerization step and di-block copolymers can, for example, be produced if the polymer chains synthesized in the first polymerization step consist of linear chains with one single growing chain end. The molecular weight and polydispersity of each block may be controlled independently during the respective polymerization step. This process may be repeated several times and may then provide multiblock copolymers of controlled molecular weight and molecular weight distribution for each block.

The following examples illustrate the invention in more detail.

### EXAMPLES

The molecular weight was determined by gel permeation chromatography (GPC) using a Shodex RI 74 differential refractometer. A flow rate of 1 ml/min was used and samples were prepared in THF. Polystyrene standards were used for calibration.

### Example 1: Anionic synthesis of a polystyrene terminated by N-benzylidene-tert-butylamine

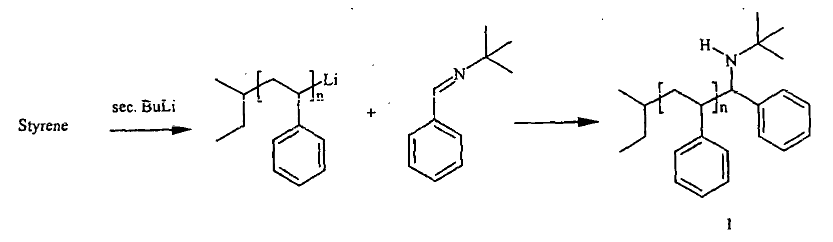

### Drying of the vessel:

To a 300 ml four-necked flat-bottomed flask fitted with a mechanical stirrer, a reflux condenser and a thermometer are added distilled cyclohexane (100 ml) and styrene (1 g) under an argon atmosphere. The temperature is then heated at 60°C and 2 ml of sec-butyllithium (Aldrich; 1.3 M) are added. The polymerization medium becomes orange and after 30 minutes, the polymerization medium is removed. Then, the reactor is filled with argon and washed with 50 ml of distilled cyclohexane.

### Polymerization:

To the dried reactor 200 ml cyclohexane and 10 g of styrene (0.096 mol) are added, and the temperature is increased to 50°C under an argon atmosphere. The polymerization of styrene is initiated by the addition of 7.69 ml of sec-butyllithium (Aldrich; 1.3 M; 0.01 mol). The polymerization medium becomes orange and the temperature increases to 60.4°C (in a slightly exothermic reaction).

After a reaction time of 1 h, the temperature is 50.5°C and 1.61 g of N-benzylidene-tert-butylamine (0.01 mol) is added. The polymerization medium becomes rapidly colorless. After 30 minutes at 50.5°C, 0.77 ml of isopropanol (0.01 mol) is added. The organic solution is then washed 3 times with 100 ml of water, dried with Na₂SO₄, filter and finally, the solvent and residual monomer are removed in vacuo at 70°C. The polymer is dissolved in 100 ml of cyclohexane, washed twice with 150 ml 1N HCl and once with water. Finally, cyclohexane is removed in vacuo at 70°C and 9.36 g of 1 are collected as a white solid.

The molecular characteristics of **1** as measured by GPC:
Mn = 1136 g/mol
Mw = 1236 g/mol
Mw/Mn = 1.09

### Example 2: Copolymerization of styrene and acrylonitrile in the presence of 1 synthesized in Example 1 and peracetic acid, according to the present invention

To a 100 ml four-necked round-bottomed flask fitted with a mechanical stirrer, a reflux condenser, a thermometer and a funnel is added 0.192 g of peracetic acid (Aldrich, 35 wt.%; 8.83 10⁻⁴ mol). Then, a mixture of 1 g of **1** (8.83 10⁻⁴ mol, calculated from the number average molecular weight Mn of **1** as determined by GPC), 14.67 g styrene (0.141 mol) and 4.89 g acrylonitrile (0.092 mol) is rapidly added via the funnel. The mixture is stirred and degassed by bubbling through argon for 10 minutes. After 30 minutes at room temperature, the mixture is heated under reflux for 2.33 h. Samples are extracted from the reaction flask after 2 h and 2.33 h and dried in vacuo at 70°C for 24 h. The monomer conversion is determined by gravimetric analysis and the molecular weight of the polymer is determined by GPC. Table 1 shows the results obtained by GPC.

**Table 1: Results of GPC**

| Time (h) | Conversion (%) | Mₙ | M_{w} | M_{w}/Mₙ |
|---|---|---|---|---|
| 2 | 64.5 | 46330 | 65270 | 1.41 |
| 2.33 | 89.5 | 53460 | 78310 | 1.47 |

The increase in the molecular weight of the polymer with the monomer conversion rate and the narrow polydispersity are consistent with a controlled process.

Additionally, the polymerization of SAN in the presence of 1 and peracetic acid, in the absence of any additional initiator, takes place very quickly and is almost complete after 2.5 h.

### Comparative example A: Polymerization of styrene/acrylonitrile in the presence of peracetic acid and in the absence of 1.

To a 100 ml four-necked round bottomed flask fitted with a mechanical stirrer, a reflux condenser, a thermometer and a funnel is added 0.192 g of peracetic acid (Aldrich, 35 wt.%; 8.83 10⁻⁴ mol). Then, a mixture of 14.67 g of styrene (0.141 mol) and 4.89 g of acrylonitrile (0.092 mol) is rapidly added via the funnel. The mixture is stirred and degassed by bubbling through argon for 10 minutes. After 30 minutes at room temperature, the mixture is heated under reflux for 45 minutes. The polymer is dissolved in chloroform, precipitated in methanol and then dried in vacuo at 50°C. The monomer conversion is determined by gravimetric analysis and the molecular weight of the polymer is determined by GPC. Table 2 shows the results obtained by GPC.

**Table 2: Results of GPC**

| **Time** (h) | **Conversion** (%) | **M**_{**n**} | **M**_{**w**} | **M**_{W}/**M**ₙ |
|---|---|---|---|---|
| 0.75 | 94.5 | 116400 | 276100 | 2.37 |

The polymerization in the absence of 1 takes place very rapidly and in an uncontrolled manner. A high molecular weight polymer and very broad polydispersity are obtained.

### Comparative example B: Polymerization of styrene/acrylonitrile in the presence of 2,2,6,6-tetramethylpiperidine-1-oxyl (TEMPO)

To a 100 ml four-necked round-bottomed flask fitted with a mechanical stirrer, a reflux condenser, a thermometer and a funnel is added a mixture of 14.67 g styrene (0.141 mol), 4.89 g acrylonitrile (0.092 mol) and 0.137 g TEMPO (8.8 10⁻⁴ mol) rapidly via the funnel. The mixture is stirred and degassed by bubbling through argon for 10 minutes. After 30 minutes at room temperature, the mixture is heated under reflux for 24 h. Samples are extracted from the reaction flask after 2 h and 24 h and dried in vacuo at 70°C for 24 h. The monomer conversion is determined by gravimetric analysis and the molecular weight of the polymer is determined by GPC.

Table 3 shows the results obtained by GPC.

**Table 3: Results of GPC**

| Time (h) | Conversion (%) | Mₙ | M_{w} | M_{w}/Mₙ |
|---|---|---|---|---|
| 2 | 0 | - | - | - |
| 24 | 55.1 | 9400 | 13140 | 1.39 |

When using the same molar amount of TEMPO (8.8·10⁻⁴ mol) as of 1 (8.8·10⁻⁴ mol), the polymerization of SAN is much slower in the presence of TEMPO compared to the polymerization of SAN in the presence of a combination of 1 and peracetic acid. Indeed, an only 55 % monomer conversion is obtained after 24 h at reflux in the presence of TEMPO compared to a 89.5 % monomer conversion after 2,33 h in the presence of 1 and peracetic acid.

### Example 3: Anionic synthesis of a polystyrene terminated by N-benzylidene tert-butylamine in a more concentrated solution than in Example 1

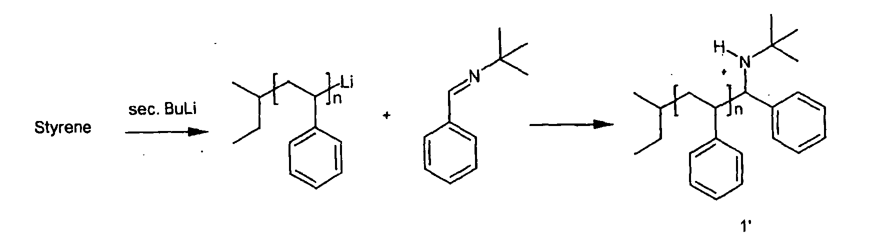

### Drying of the vessel:

To a 300 ml four-necked flat-bottomed flask fitted with a mechanical stirrer, a reflux condenser and a thermometer are added distilled cyclohexane (100 ml) and styrene (1 g) under an argon atmosphere. The mixture is then heated to 60°C and 2 ml of sec-butyllithium (Aldrich; 1.3 M) are added. The polymerization medium becomes orange and, after 30 minutes, the polymerization medium is removed. Then, the reactor is filled with argon and washed with 50 ml of distilled cyclohexane.

### Polymerization:

To the dried reactor are added 200 ml cyclohexane and 20 g of styrene (0.192 mol), and the temperature is increased to 40°C under an argon atmosphere. The polymerization of styrene is initiated by the addition of 15.4 ml of sec-butyllithium (Aldrich; 1.3 M; 0.02 mol). The polymerization medium becomes orange and the temperature increases to 64.4°C (in an exothermic reaction). After a reaction time of 1 h, the temperature is 41.1°C and 3.22 of g N-benzylidene tert-butylamine (0.02 mol) are added. The polymerization medium rapidly becomes colorless. After 30 minutes at 41.1 °C, 3.1 ml of isopropanol (0.04 mol) are added. The organic solution is then washed once with 200 ml of water, twice with 200 ml of 1N HCl and once with 200 ml of water and it is then dried with Na₂SO₄, filtered and finally the solvent and residual monomer are removed in vacuo at 70°C. 22.72 g of 1' are collected as a white solid.

The molecular characteristics of 1' as measured by GPC are as follows:
Mn =1054 g/mol
Mw = 1140 g/mol
Mw/Mn = 1.08

### Example 4: Copolymerization of styrene and acrylonitrile in the presence of 1' synthesized in Example 3 and peracetic acid, according to the present invention

To a 100 ml four-necked round-bottomed flask fitted with a mechanical stirrer, a reflux condenser, a thermometer and a funnel is added 0.096 g of peracetic acid (Aldrich, 35 wt.%; 4.418 10⁻⁴ mol). Then a mixture of 0.5 g of 1', 14.67 g of styrene (0.141 mol) and 4.89 g of acrylonitrile (0.092 mol) is rapidly added via the funnel. The mixture is stirred and degassed by bubbling through argon for 10 minutes. After 30 minutes at room temperature, the mixture is heated under reflux for 2 h. Samples are extracted from the reaction flask after 1 and 2 h and dried in vacuo at 50°C for 24 h. The monomer conversion is determined by gravimetric analysis and the molecular weight of the polymer is determined by GPC. Table 4 shows the results obtained by GPC.

**Table 4: Results of GPC**

| Time (h) | Conversion (%) | Mₙ | M_{w} | M_{w}/Mₙ |
|---|---|---|---|---|
| 1 | 15.9 | 24420 | 34540 | 1.41 |
| 2 | 71.7 | 59780 | 86240 | 1.44 |

The increase in the molecular weight of the polymer with the monomer conversion and the narrow polydispersity are consistent with a controlled process.

Additionally, in contrast to the other NMP systems actually reported in the literature, the polymerization of SAN in the presence of 1' and peracetic acid, in the absence of any additional initiator, takes place very quickly (and is almost complete after 2.5 h).

### Example 5: Copolymerization of styrene and acrylonitrile in the presence of 1' synthesized in Example 3 and peracetic acid: synthesis of controlled high molecular weight SAN

To a 250 ml four-necked round-bottomed flask fitted with a mechanical stirrer, a reflux condenser, a thermometer and a funnel is added 0.192 g peracetic acid (Aldrich, 35 wt.%; 8.83 10⁻⁴ mol). Then, a mixture of 1 g of 1', 58.68 g styrene (0.563 mol) and 19.56 g acrylonitrile (0.369 mol) is rapidly added via the funnel. The mixture is stirred and degassed by bubbling through argon for 10 minutes. After 30 minutes at room temperature, the mixture is heated under reflux for 5.2 h. Samples are extracted from the reaction flask after 1.5 h, 4 h, and 5.33 h and dried in vacuo at 50°C for 24 h. The monomer conversion is determined by gravimetric analysis and the molecular weight of the polymer is determined by GPC.

The results obtained are summarized in Table 5.

**Table 5: Results of GPC**

| Time (h) | Conversion (%) | Mₙ | M_{w} | M_{w}/Mₙ |
|---|---|---|---|---|
| 1.5 | 16.9 | 49930 | 77980 | 1.56 |
| 4 | 48.2 | 82280 | 129200 | 1.57 |
| 5.33 | 71.7 | 112600 | 181700 | 1.61 |

The increase in the molecular weight of the polymer with the monomer conversion and the narrow polydispersity are consistent with a controlled process. Controlled high molecular weight SAN may be synthesized in a short reaction time using 1'.

### Comparative example C: Copolymerization of styrene and acrylonitrile in the presence of TEMPO

To a 100 ml four-necked round-bottomed flask fitted with a mechanical stirrer, a reflux condenser, a thermometer and a funnel, a mixture of 0.0548 g of TEMPO (3.5 10⁻⁴ mol), 29.34 g styrene (0.563 mol) and 9.78 g acrylonitrile (0.369 mol) is added. The mixture is stirred and degassed by bubbling through argon for 10 minutes. Then, the mixture is heated under reflux for 24 h. Samples are extracted from the reaction flask after 2 h, 12 h and 24 h and dried in vacuo at 50°C for 24 h. The monomer conversion is determined by gravimetric analysis and the molecular weight of the polymer is determined by GPC.

The results obtained are summarized in Table 6.

**Table 6: Results of GPC**

| | | | | |
|---|---|---|---|---|
| **Time** (h) | **Conversion** (%) | **M**_{**n**} | **M**_{**w**} | **M**_{**w**}**/M**_{**n**} |
| 2 | 0,3 | - | - | - |
| 12 | 25.6 | 26120 | 36470 | 1.39 |
| 24 | 64.8 | 44440 | 73930 | 1.66 |

The polymerization is very slow (only traces of polymer are obtained after 2 h of polymerization) and an only 64.8 % monomer conversion is obtained after a reaction time of 24 h.

### Example 6: Copolymerization of n-butylacrylate, styrene and acrylonitrile in the presence of 1' synthesized in Example 3 and peracetic acid

To a 100 ml four-necked round bottomed flask fitted with a mechanical stirrer, a reflux condenser, a thermometer and a funnel, 0.192 g of peracetic acid (Aldrich, 35 wt.%; 8.83 10⁻⁴ mol) is added. Then a mixture of 1 g of 1', 19.56 g of n-butyl acrylate (0.152 mol), 14.67 g styrene (0.141 mol) and 4.89 g of acrylonitrile (0.092 mol) is rapidly added via the funnel. The mixture is stirred and degassed by bubbling through argon for 10 minutes. After 30 minutes at room temperature, the mixture is heated at 110°C for 4 h. Samples are extracted from the reaction flask after 1 h, 2 h, and 4 h and dried in vacuo at 80°C for 24 h. The monomer conversion is determined by gravimetric analysis and the molecular weight of the polymer is determined by GPC.

The results obtained are summarized in Table 7.

**Table 7: Results of GPC**

| **Time** (h) | **Conversion** (%) | **M**_{**n**} | **M**_{**w**} | **M**_{**w**}**/M**_{**n**} |
|---|---|---|---|---|
| 1 | 21.1 | 32090 | 50200 | 1.56 |
| 2 | 50.0 | 54100 | 82470 | 1.52 |
| 4 | 76.5 | 73370 | 129000 | 1.75 |

The increase in the molecular weight of the polymer with the monomer conversion and the narrow polydispersity are consistent with a controlled process. Additionally, the copolymerization takes place rapidly without the addition of any activator: 76.5 % monomer conversion after 4 h at a low temperature (110°C).

### Example 7: Anionic synthesis of a polystyrene terminated by N-benzylidene tert-butylamine at both chain ends

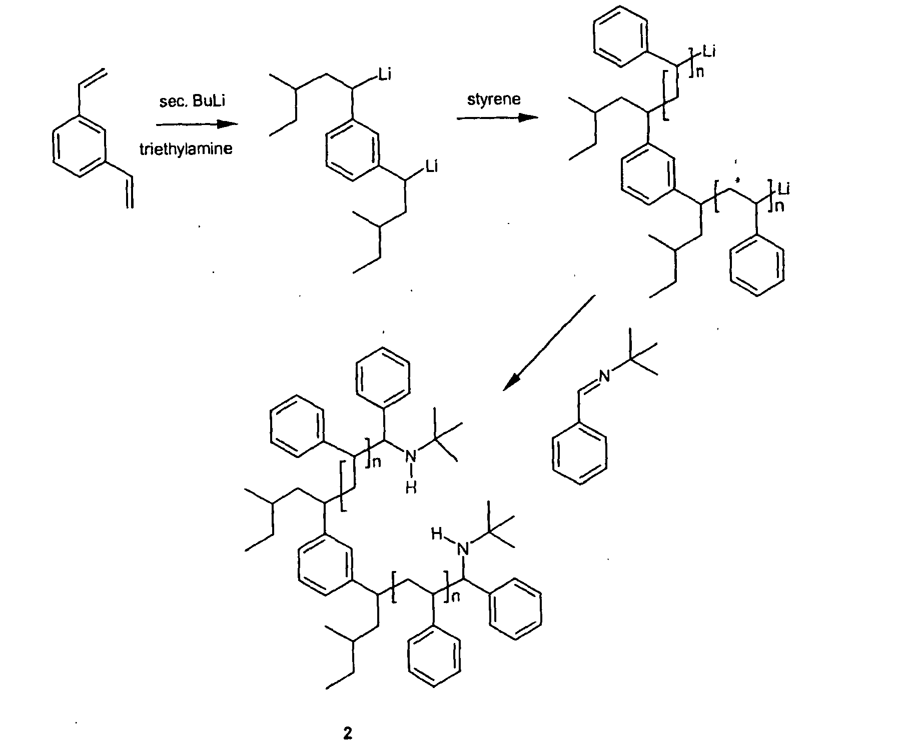

### Drying of the vessel:

To a 300 ml four-necked flat-bottomed flask fitted with a mechanical stirrer, a reflux condenser and a thermometer are added distilled cyclohexane (100 ml) and styrene (1 g) under an argon atmosphere. The temperature is then heated at 60°C and 2 ml of sec-butyllithium (Aldrich; 1.4 M) are added. The polymerization medium becomes orange and after 30 minutes is removed. Then the reactor is filled with argon and washed with 50 ml of distilled cyclohexane.

### Polymerization:

To the dried reactor, 200 ml of cyclohexane and 14.3 ml of sec-butyllithium (Aldrich; 1.4 M) are added. The solution is heated at 40°C and 2 ml of dried triethylamine (1 M in cyclohexane) are added. A solution of divinylbenzene in cyclohexane (1.3 g in 10 ml cyclohexane; 0.01 mol; 0.5 eq. based on sec. butyllithium) is then added slowly to the reaction flask over a period of 15 minutes. The reaction solution becomes deep red. After 30 min. at 40°C, 20 g of styrene (0.192 mol) are added and the reaction is stirred for 30 min. at 60°C. After this period of time, 3.23 g of N-benzylidenes tert-butylamine (0.02 mol) are added. The polymerization medium becomes rapidly colorless. After 30 minutes at 60°C, 2 ml of isopropanol (0.026 mol) are added. The organic solution is then washed twice with 200 ml of HCl 1N, once with 100 ml of water and twice with 200 ml of NaOH 1N and it is then dried with Na₂SO₄, filtered and finally, the solvent and residual monomer are removed in vacuo at 70°C. 24.33 g of 2 are collected as a white solid.

The molecular characteristics of 2 as measured by GPC are as follows:
Mn = 1946
Mw = 2348
Mw/Mn = 1.20

### Example 8: Copolymerization of styrene and acrylonitrile in the presence of 2 synthesized in Example 7 and peracetic acid.

To a 100 ml four-necked round bottomed flask fitted with a mechanical stirrer, a reflux condenser, a thermometer and a funnel 0.222 g of peracetic acid (Aldrich, 35 wt.%; 1 10⁻³ mol) is added. Then, a mixture of 1 g of 2, 29.34 g of styrene (0.281 mol) and 9.78 g of acrylonitrile (0.184 mol) is rapidly added via the funnel. The mixture is stirred and degassed by bubbling through argon for 10 minutes. After 30 minutes at room temperature, the mixture is heated under reflux for 2 h. Samples are extracted from the reaction flask after 1 h and 2 h and dried in vacuo at 50°C for 24 h. The monomer conversion is determined by gravimetric analysis and the molecular weight of the polymer is determined by GPC.

The results obtained are summarized in Table 8.

**Table 8: Results of GPC**

| **Time (h)** | **Conversion (%)** | **M**_{**n**} | **M**_{**w**} | **M**_{**w**}**/M**_{**n**} |
|---|---|---|---|---|
| 1 | 20.3 | 43500 | 70000 | 1.61 |
| 2 | 73.2 | 80000 | 132400 | 1.65 |

Controlled polymerization is observed, as shown by the increase in the molecular weight with the monomer conversion and the narrow polydispersity.

Surprisingly, although high molecular weight SAN is formed, the polymerization takes place very rapidly compared to the conventional NMP process: after only 2 hours under reflux, a 73,2% monomer conversion is obtained.

### Example 9: Anionic synthesis of a star-like polystyrene terminated by N-benzylidene tert-butylamine at each arm-ends

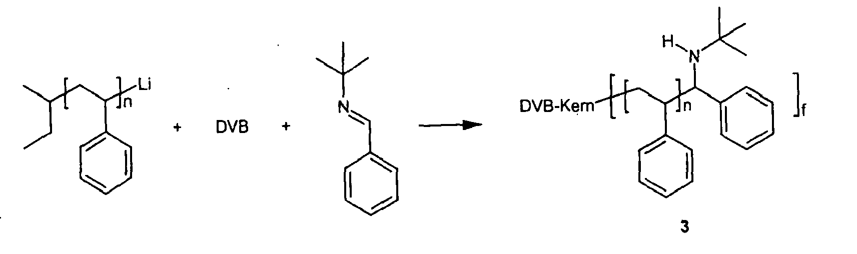

### Drying of the vessel:

To a 300 ml four-necked flat-bottomed flask fitted with a mechanical stirrer, a reflux condenser and, a thermometer are added distilled cyclohexane (100 ml) and styrene (1 g) under an argon atmosphere. The mixture is then heated at 60°C and 2 ml of sec-butyllithium (Aldrich; 1.4 M) are added. The polymerization medium becomes orange and after 30 minutes, it is removed. Then the reactor is filled with argon and washed with 50 ml of distilled cyclohexane.

### Polymerization:

To the dried reactor, 200 ml of cyclohexane and 14.3 ml of sec-butyllithium (Aldrich; 1.4 M) are added. The solution is heated at 40°C and 2 ml of dried triethylamine (1 M in cyclohexane) are added. A solution of divinylbenzene in cyclohexane (1.95 g divinylbenzene dissolved in 10 ml cyclohexane) is then added slowly for 15 minutes to the reaction flask. After 30 min. at 40°C, 20 g of styrene (0.192 mol) are added and the reaction is continued for 30 min. at 60°C. After this period of time, 3.23 g of N-benzylidene tert-butylamine (0.02 mol) are added. The polymerization medium rapidly becomes colorless. After 30 minutes at 60°C, 2 ml of isopropanol (0.026 mol) are added. The organic solution is then washed twice with 200 ml of HCl 1N, once with 100 ml of water and twice with 200 ml of NaOH 1N and it is then dried with Na₂SO₄, filtered and finally, the solvent and residual monomer are removed in vacuo at 70°C. 24.52 g of 3 are collected as a white solid.

The molecular characteristics of 3 as measured by GPC are as follows:
Mn = 2795
Mw = 3603
Mw/Mn = 1.28

### Example 10: Copolymerization of styrene and acrylonitrile in the presence of 3 synthesized in Example 9 and peracetic acid.

To a 100 ml four-necked round-bottomed flask fitted with a mechanical stirrer, a reflux condenser, a thermometer and a funnel 0.2336 g peracetic acid (Aldrich, 35 wt.%; 1 10⁻³ mol) is added. Then, a mixture of 1 g of 3, 14.67 g styrene (0.14 mol) and 4.89 g acrylonitrile (0.092 mol) is rapidly added via the funnel. The mixture is stirred and degassed by bubbling through argon for 10 minutes. After 30 minutes at room temperature, the mixture is heated under reflux for 3 h.

Samples are extracted from the reaction flask after 2 h and 3 h and dried in vacuo at 50°C for 24 h. The monomer conversion is determined by gravimetric analysis and the molecular weight of the polymer is determined by GPC.

The results obtained are summarized in Table 9.

**Table 9: Results of GPC**

| **Time (h)** | **Conversion (%)** | **M**_{**n**} | **M**_{**w**} | M_{w}/Mₙ |
|---|---|---|---|---|
| 2 | 60.4 | 64300 | 106900 | 1.66 |
| 3 | 79.5 | 76200 | 143700 | 1.88 |

The increase in the molecular weight with the monomer conversion and the narrow polydispersity are indicative of a controlled process. Moreover and surprisingly, polymerization takes place very rapidly (a monomer conversion of approx. 80% after only 3 h under reflux).

### Example 11: Copolymerization of styrene and acrylonitrile in the presence of 3 synthesized in Example 9 and peracetic acid.

To a 1 litre four-necked round-bottomed flask fitted with a mechanical stirrer, a reflux condenser, a thermometer and a funnel, 3.58 g peracetic acid (Aldrich, 35 wt.%; 1.64 10⁻² mol) are added. Then a mixture of 15.337 g of 3, 450 g of styrene (4.32 mol) and 150 g of acrylonitrile (2.82 mol) is rapidly added via the funnel. The mixture is stirred and degassed by bubbling through argon for 10 minutes. After 30 minutes at room temperature, the mixture is heated under reflux for 8 h. Then, the reaction is stopped and the polymer is dried in vacuo at 60°C for 24 h. The monomer conversion is determined by gravimetric analysis and the molecular weight of the polymer is determined by GPC.

The results obtained are summarized in Table 10.

**Table 10: Results of GPC**

| **Time (h)** | **Conversion (%)** | **M**_{**n**} | **M**_{**w**} | **M**_{**w**}**/M**_{**n**} |
|---|---|---|---|---|
| 8 | 58.48 | 176000 | 298300 | 1.69 |

A high molecular weight SAN is synthesized with a narrow polydispersity.

## Claims

1. A process for the preparation of (co)oligomers or (co)polymers comprising preparing a mixture that includes at least one monoethylenically unsaturated monomer of the general formula (M),
HR¹C = CR²R³ (M)
wherein
each of R¹, R², R³ is independently selected from the group consisting of hydrogen, C₁-C₂₀-alkyl, C₁-C₂₀-cycloalkyl C₆-C₂₄-aryl, halogen, cyano, C₁-C₂₀-alkylester C₁-C₂₀-Cycloalkylester, C₁-C₂₀-alkylamide, C₁-C₂₀₋cycloalkylamide C₆-C₂₄-arylester or C₆-C₂₄-arylamide,
at least one oxidizing agent (A) and
at least one polymer or oligomer of the general formula (I), 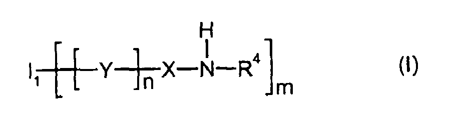 wherein
Y organic residue based on ethylenically unsaturated monomers (M) corresponding to the general formula HR¹C=CR²R³ and
R¹, R², R³ have the aforesaid meaning,
m is an integer of 1 to 50,
n is an integer of 1 to 300 and
I₁ represents an initiator and
R⁴ represents a secondary or tertiary carbon atom and is independently selected from the group consisting of C₁-C₁₈-alkyl, C₂-C₁₈-alkenyl, C₂-C₁₈-alkynyl, C₃-C₁₂-cycloalkyl or C₃-C₁₂-heterocycloalkyl, C₆-C₂₄-aryl, which may be unsubstituted or substituted by NO₂, halogen, amino, hydroxy, cyano, carboxy, ketone, C₁-C₄-alkoxy, C₁-C₄-alkylthio or C₁-C₄-alkylamino,
X represents a secondary or tertiary carbon atom and is independently selected from the group consisting of C₁-C₁₈-alkyl, C₂-C₁₈-alkenyl, C₂-C₁₈-alkynyl, C₃-C₁₂-cycloalkyl or C₃-C₁₂-heterocycloalkyl, C₆-C₂₄-aryl, which may be unsubstituted or substituted by NO₂, halogen, amino, hydroxy, cyano, carboxy, ketone, C₁-C₄-alkoxy, C₁-C₄-alkylthio or C₁-C₄-alkylamino,
and an optional free radical initiator (B) and
(II) heating the mixture at a temperature in the range of 0°C to 220°C.

2. The process according to Claim 1, wherein the mixture further contains a solvent selected from the group consisting of water, alcohols, esters, ethers, ketones, amides, sulfoxides and hydrocarbons.

3. The process according to Claim 1, wherein the monomer (M) is selected from the group consisting of styrene, substituted styrene, conjugated dienes, acrolein, vinyl acetate, acrylonitrile, methyl acrylate, methyl methacrylate, butyl acrylate, butyl methacrylate, 2-ethylhexyl acrylate, cyclohexyl methacrylate, isobornyl methacrylate and maleic anhydride.

4. The process according to Claim 1, wherein the oxidizing agent (A) is selected from the group consisting of peracetic acid, perpropionic acid, hydrogen peroxide, hydrogen peroxide/titanium containing catalysts, potassium peroxymonosulfate (2 KHSO₅·KHSO₄·K₂SO₄), silver oxide and lead (IV) oxide.

5. The process according to Claim 1, wherein the temperature in (II) is 50 to 180°C.

6. The process according to Claim 1, wherein the temperature in (II) is 70 to 150°C.

7. The process according to Claim 1, wherein the mixture is prepared at a temperature of 0 to 100°C.

8. The process according to Claim 1, wherein the mixture is prepared temperature of 0 to 50°C.

9. A process for the preparation of nitroxyl radicals of the general formula (III), 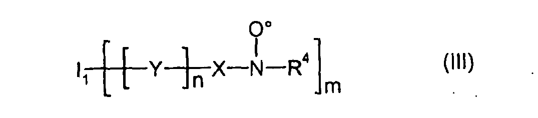 wherein
Y organic residue based on ethylenically unsaturated monomers (M) corresponding to the general formula HR¹C=CR²R³ and
R¹, R², R³ is independently selected from the group consisting of: hydrogen, C₁-C₂₀-alkyl, C₁-C₂₀-cycloalkyl C₆-C₂₄-aryl, halogen, cyano, C₁-C₂₀alkyl ester C₁-C₂₀-cycloalkyl ester, C₁-C₂₀₋alkylamide, C₁-C₂₀-cycloalkylamide C₆-C₂₄-aryl ester or C₆-C₂₄₋arylamide,
m is an integer of 1 to 50,
n is an integer of 1 to 300, and
I₁ represents an initiator and
R⁴ represents a secondary or tertiary carbon atom and is independently selected from the group consisting of C₁-C₁₈-alkyl, C₂-C₁₈-alkenyl, C₂-C₁₈-alkynyl, C₃-C₁₂-cycloalkyl or C₃-C₁₂-heterocycloalkyl, C₆-C₂₄-aryl, which may be unsubstituted or substituted by NO₂, halogen, amino, hydroxy, cyano, carboxy, ketone, C₁-C₄-alkoxy, C₁-C₄-alkylthio or C₁-C₄-alkylamino,
X represents a secondary or tertiary carbon atom selected from the group consisting of C₁-C₁₈-alkyl, C₂-C₁₈-alkenyl, C₂-C₁₈-alkynyl, C₃-C₁₂-cycloalkyl or C₃-C₁₂-heterocycloalkyl, C₆-C₂₄-aryl, which may be unsubstituted or substituted by NO₂, halogen, amino, hydroxy, cyano, carboxy, ketone, C₁-C₄-alkoxy, C₁-C₄-alkylthio or C₁-C₄-alkylamino,
comprising forming a mixture that contains a polymer or an oligomer conforming to formula (I) 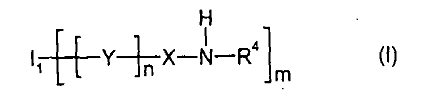 wherein
I₁, Y, n, X, R⁴ and n are as defined above , and an oxidizing agent, and isolating the compound of formula (III).

## Revendications

1. Procédé de préparation de (co)oligomères ou (co)polymères comprenant le fait de préparer un mélange qui contient au moins un monomère monoéthyléniquement insaturé de formule générale (M),
HR¹C=CR²R³ (M)
dans laquelle
chaque symbole R¹, R², R³ est indépendamment choisi dans le groupe comprenant un atome d'hydrogène ou un atome d'halogène ou les groupes alkyle en C₁₋₂₀, cycloalkyle en C₁₋₂₀, aryle en C₆₋₂₄, cyano, alkylester en C₁₋₂₀, cycloalkylester en C₁₋₂₀, alkylamide en C₁₋₂₀, cycloalkylamide en C₁₋₂₀, arylester en C₆₋₂₄ ou arylamide en C₆₋₂₄,
au moins un agent oxydant (A) et
au moins un polymère ou un oligomère de formule générale (I), 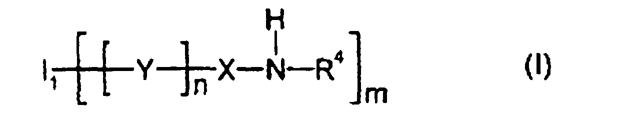 dans laquelle
Y représente un résidu organique à base de monomères éthyléniquement insaturés (M) qui correspondent à la formule générale HR¹C=CR²R³ et
R¹, R², R³ ont les significations indiquées ci-dessus,
m représente un nombre entier valant de 1 à 50,
n représente un nombre entier valant de 1 à 300 et
I₁ représente un initiateur et
R⁴ représente un atome de carbone secondaire ou tertiaire et est indépendamment choisi dans l'ensemble comprenant un groupe alkyle en C₁₋₁₈, alcényle en C₂₋₁₈, alcynyle en C₂₋₁₈, cycloalkyle en C₃₋₁₂, hétérocycloalkyle en C₃₋₁₂, ou aryle en C₆₋₂₄, qui peut porter ou non un ou plusieurs substituant choisis parmi un atome d'halogène ou les groupes NO₂, amino, hydroxyle, cyano, carboxyle, cétone, alcoxy en C₁₋₄, alkylthio en C₁₋₄ ou alkylamino en C₁₋₄,
X représente un atome de carbone secondaire ou tertiaire et est indépendamment choisi dans l'ensemble comprenant un groupe alkyle en C₁₋₁₈, alcényle en C₂₋₁₈, alcynyle en C₂₋₁₈, cycloalkyle en C₃₋₁₂, hétérocycloalkyle en C₃₋₁₂, ou aryle en C₆₋ 24, qui peut porter ou non un ou plusieurs substituant choisis parmi un atome d'halogène ou les groupes NO₂, amino, hydroxyle, cyano, carboxyle, cétone, alcoxy en C₁₋₄, alkylthio en C₁₋₄ ou alkylamino en C₁₋₄,
et éventuellement, un initiateur de radicaux libres (B) et
(II) le fait de chauffer le mélange à une température se situant dans l'intervalle allant de 0 à 220°C.

2. Procédé selon la revendication 1, dans lequel le mélange contient en outre un solvant choisi dans le groupe comprenant de l'eau, des alcools, des esters, des éthers, des cétones, des amides, des sulfoxydes et des hydrocarbures.

3. Procédé selon la revendication 1, dans lequel le monomère (M) est choisi dans le groupe comprenant du styrène, du styrène portant un ou plusieurs substituants, des diènes conjugués, de l'acroléine, de l'acétate de vinyle, de l'acrylonitrile, de l'acrylate de méthyle, du méthacrylate de méthyle, de l'acrylate de butyle, du méthacrylate de butyle, de l'acrylate de 2-éthylhexyle, du méthacrylate de cyclohexyle, du méthacrylate d'isobomyle et de l'anhydride maléique.

4. Procédé selon la revendication 1, dans lequel l'agent oxydant (A) est choisi dans le groupe comprenant de l'acide peracétique, de l'acide perpropionique, du peroxyde d'hydrogène, des catalyseurs renfermant du peroxyde d'hydrogène et du titane, du peroxymonosulfate de potassium (2KHSO₅.KHSO₄.K₂SO₄), de l'oxyde d'argent et de l'oxyde de plomb (IV).

5. Procédé selon la revendication 1, dans lequel la température dans l'étape (II) vaut de 50 à 180°C.

6. Procédé selon la revendication 1, dans lequel la température dans l'étape (II) vaut de 70 à 150°C.

7. Procédé selon la revendication 1, dans lequel le mélange est préparé à une température valant de 0 à 100°C.

8. Procédé selon la revendication 1, dans lequel le mélange est préparé à une température valant de 0 à 50°C.

9. Procédé de préparation de radicaux nitroxyles de formule générale (III), 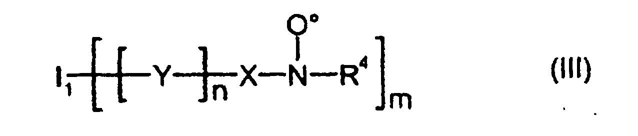 dans laquelle,
Y représente un résidu organique à base de monomères éthyléniquement insaturés (M) qui correspondent à la formule générale HR¹C=CR²R³ et
chaque symbole R¹, R², R³ est indépendamment choisi dans le groupe comprenant un atome d'hydrogène ou un atome d'halogène ou les groupes alkyle en C₁₋₂₀, cycloalkyle en C₁₋₂₀, aryle en C₆₋₂₄, cyano, alkylester en C₁₋₂₀, cycloalkylester en C₁₋₂₀, alkylamide en C₁₋₂₀, cycloalkylamide en C₁₋₂₀, arylester en C₆₋₂₄ ou arylamide en C₆₋₂₄,
m représente un nombre entier valant de 1 à 50,
n représente un nombre entier valant de 1 à 300 et
I₁ représente un initiateur et
R⁴ représente un atome de carbone secondaire ou tertiaire et est indépendamment choisi dans l'ensemble comprenant un groupe alkyle en C₁₋₁₈, alcényle en C₂₋₁₈, alcynyle en C₂₋₁₈, cycloalkyle en C₃₋₁₂, hétérocycloalkyle en C₃₋₁₂, ou aryle en C₆₋₂₄, qui peut porter ou non un ou plusieurs substituant choisis parmi un atome d'halogène ou les groupes NO₂, amino, hydroxyle, cyano, carboxyle, cétone, alcoxy en C₁₋₄, alkylthio en C₁₋₄ ou alkylamino en C₁₋₄,
X représente un atome de carbone secondaire ou tertiaire choisi dans l'ensemble comprenant un groupe alkyle en C₁₋₁₈, alcényle en C₂₋₁₈, alcynyle en C₂₋₁₈, cycloalkyle en C₃₋₁₂, hétérocycloalkyle en C₃₋₁₂, ou aryle en C₆₋₂₄, qui peut porter ou non un ou plusieurs substituant choisis parmi un atome d'halogène ou les groupes NO₂, amino, hydroxyle, cyano, carboxyle, cétone, alcoxy en C₁₋₄, alkylthio en C₁₋₄ ou alkylamino en C_{1-4,}
Comprenant le fait de former un mélange qui contient un polymère ou un oligomère conformément à la formule (I) 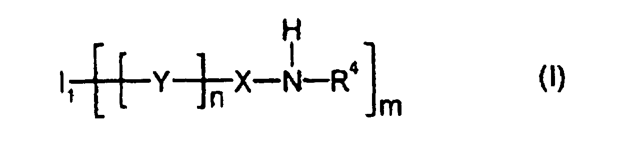 dans laquelle
I₁, Y, n, X, R⁴ et n ont les significations indiquées ci-dessus, ainsi qu'un agent oxydant,
et le fait d'isoler le composé de formule (III).

## Patentansprüche

1. Verfahren zur Herstellung von (Co)oligomeren oder (Co)polymeren, umfassend Stufen, in denen man
(I) eine Mischung zubereitet, die mindestens ein monoethylenisch ungesättigtes Monomer der allgemeinen Formel (M):
HR¹C = CR²R³ (M),
worin
jeder der Reste R¹, R² und R³ unabhängig aus der Gruppe ausgewählt ist, bestehend aus Wasserstoff, C₁₋₂₀-Alkyl, C₁₋₂₀-Cycloalkyl, C₆₋₂₄-Aryl, Halogen, Cyano, C₁₋₂₀-Alkylester, C₁₋₂₀-Cycloalkylester, C₁₋₂₀-Alkylamid, C₁₋₂₀-Cycloalkylamid, C₆₋₂₄-Arylester oder aus C₆₋₂₄-Arylamid,
mindestens ein oxidierendes Mittel (A) und
mindestens ein Polymer oder Oligomer der allgemeinen Formel (I): 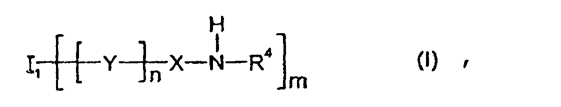 worin gilt:
Y ist ein organischer Rest auf Basis von ethylenisch ungesättigten Monomeren (M), der allgemeinen Formel HR¹C=CR²R³, worin R¹, R² und R³ die vorgenannten Bedeutungen haben;
m ist eine ganze Zahl von 1 bis 50;
n ist eine ganze Zahl von 1 bis 300;
I₁ stellt einen Initiator dar;
R⁴ stellt ein sekundäres oder tertiäres Kohlenstoffatom dar und ist unabhängig aus der Gruppe ausgewählt, bestehend aus C₁₋₁₈-Alkyl, C₂₋₁₈-Alkenyl, C₂₋₁₈-Alkinyl, C₃₋₁₂-Cycloalkyl oder C₃₋₁₂-Heterocycloalkyl, C₆₋₂₄-Aryl, das unsubstituiert oder mit NO₂ substituiert ist, Halogen, Amino, Hydroxy, Cyano, Carboxy, Keton, C₁₋₄-Alkoxy, C₁₋₄-Alkylthio oder aus C₁₋₄-Alkylamino;
X stellt ein sekundäres oder tertiäres Kohlenstoffatom dar und ist unabhängig aus der Gruppe ausgewählt, bestehend aus C₁₋₁₈-Alkyl, C₂₋₁₈-Alkenyl, C₂₋₁₈-Alkinyl, C₃₋₁₂-Cycloalkyl oder C₃₋₁₂-Heterocycloalkyl, C₆₋₂₄-Aryl, das unsubstituiert oder mit NO₂ substituiert ist, Halogen, Amino, Hydroxy, Cyano, Carboxy, Keton, C₁₋₄-Alkoxy, C₁₋₄-Alkylthio oder aus C₁₋₄-Alkylamino;
und gegebenenfalls einen freien Radikal-Initiator (B) einschließt, und man
(II) die Mischung bei einer Temperatur im Bereich von 0°C bis 220°C erhitzt.

2. Verfahren gemäß Anspruch 1, worin die Mischung ferner ein Lösungsmittel enthält, ausgewählt aus der Gruppe, bestehend aus Wasser, Alkoholen, Estern, Ethern, Ketonen, Amiden, Sulfoxiden und aus Kohlenwasserstoffen.

3. Verfahren gemäß Anspruch 1, worin das Monomer (M) aus der Gruppe ausgewählt ist, bestehend aus Styrol, substituierten Styrolen, konjugierten Dienen, Acrolein, Vinylacetat, Acrylnitril, Methylacrylat, Methylmethacrylat, Butylacrylat, Butylmethacrylat, 2-Ethylhexylacrylat, Cyclohexylmethacrylat, Isobornylmethacrylat und aus Maleinsäureanhydrid.

4. Verfahren gemäß Anspruch 1, worin das oxidierende Mittel
(A) aus der Gruppe ausgewählt ist, bestehend aus Peressigsäure, Perpropionsäure, Wasserstoffperoxid, Wasserstoffperoxid/Titan-haltigen Katalysatoren, Kaliumperoximonosulfat (2 KHSO₅ x KHSO₄ x K₂SO₄), Silberoxid und aus Blei(IV)oxid.

5. Verfahren gemäß Anspruch 1, wobei die Temperatur in (II) 50 bis 180°C beträgt.

6. Verfahren gemäß Anspruch 1, wobei die Temperatur in (II) 70 bis 150°C beträgt.

7. Verfahren gemäß Anspruch 1, wobei die Mischung bei einer Temperatur von 0 bis 100°C zubereitet wird.

8. Verfahren gemäß Anspruch 1, wobei die Mischung bei einer Temperatur von 0 bis 50°C zubereitet wird.

9. Verfahren zur Herstellung von Nitroxyl-Radikalen der allgemeinen Formel (III): 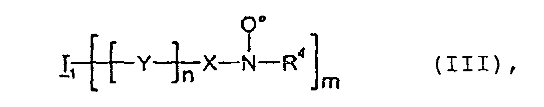 worin gilt:
Y ist ein organischer Rest auf Basis von ethylenisch ungesättigten Monomeren (M) der allgemeinen Formel HR¹C=CR²R³, worin
R¹, R² und R³ unabhängig aus der Gruppe ausgewählt sind, bestehend aus Wasserstoff, C₁₋₂₀-Alkyl, C₁₋₂₀-Cycloalkyl, C₆₋₂₄-Aryl, Halogen, Cyano, C₁₋₂₀-Alkylester, C₁₋₂₀-Cycloalkylester, C₁₋₂₀-Alkylamid, C₁₋₂₀-Cycloalkylamid, C₆₋₂₄-Arylester oder aus C₆₋₂₄-Arylamid;
m ist eine ganze Zahl von 1 bis 50;
n ist eine ganze Zahl von 1 bis 300;
I₁ stellt einen Initiator dar;
R⁴ stellt ein sekundäres oder tertiäres Kohlenstoffatom dar und ist unabhängig aus der Gruppe ausgewählt, bestehend aus C₁₋₁₈-Alkyl, C₂₋₁₈-Alkenyl, C₂₋₁₈-Alkinyl, C₃₋₁₂-Cycloalkyl oder C₃₋₁₂-Heterocycloalkyl, C₆₋₂₄-Aryl, das unsubstituiert oder mit NO₂ substituiert ist, Halogen, Amino, Hydroxy, Cyano, Carboxy, Keton, C₁-₄-Alkoxy, C₁₋₄-Alkylthio oder aus C₁₋₄-Alkylamino;
X stellt ein sekundäres oder tertiäres Kohlenstoffatom dar, das aus der Gruppe ausgewählt ist, bestehend aus C₁₋₁₈-Alkyl, C₂₋₁₈-Alkenyl, C₂₋₁₈-Alkinyl, C₃₋₁₂-Cycloalkyl oder C₃₋₁₂-Heterocycloalkyl, C₆₋₂₄-Aryl, das unsubstituiert oder mit NO₂ substituiert ist, Halogen, Amino, Hydroxy, Cyano, Carboxy, Keton, C₁₋₄-Alkoxy, C₁₋₄-Alkylthio oder aus C₁₋₄-Alkylamino,
wobei man eine Mischung bildet, die ein Polymer oder ein Oligomer der Formel (I): 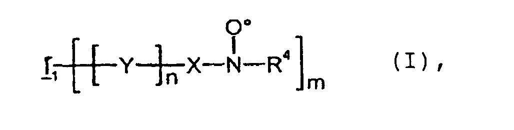
worin
I₁, Y, n, X, R⁴ und n wie oben definiert sind, und ein oxidierendes Mittel enthält, und man
die Verbindung der Formel (III) isoliert.
